# EUROPEAN PATENT SPECIFICATION

(11) **EP 0 456 131 B1**
(45) Date of publication and mention of the grant of the patent: **09.08.1995**
(21) Application number: 91107215.5
(22) Date of filing: 03.05.1991
(51) Int. Cl.: G01V 8/12

(54) **Photoelectric sensor**
Fotoelektrischer Sensor
Senseur photo-électrique

(30) Priority: 07.05.1990 JP 117994/90
(43) Date of publication of application: 13.11.1991
(73) Proprietor: OMRON CORPORATION, Kyoto-shi, Kyoto 616 (JP)
(72) Inventor: Shimokawa, Satoru, c/o Omron Corporation, Nagaokakyo-shi, Kyoto (JP); Nakamura, Arata, c/o Omron Corporation, Nagaokakyo-shi, Kyoto (JP); Misumi, Fumihiko, c/o Omron Corporation, Nagaokakyo-shi, Kyoto (JP)
(74) Representative: WILHELMS, KILIAN & PARTNER Patentanwälte

(56) References cited:
- EP-A- 0 400 176
- PATENT ABSTRACTS OF JAPAN, vol. 13, no. 181 (E-750), 27 April 1989 & JP-A-1008681
- PATENT ABSTRACTS OF JAPAN, vol. 11, no. 104 (E-494), 2 April 1987 & JP-A-61253872
- PATENT ABSTRACTS OF JAPAN, vol. 4, no. 91 (E-17), 28 June 1980 & JP-A-55056676
- PATENT ABSTRACTS OF JAPAN, vol. 5, no. 103 (E-64), 3 July 1981 & JP-A-56046574

## Description

### BACKGROUND OF THE INVENTION

### Field of the Invention:

This invention relates to a photoelectric sensor having a photoelectric transducer device and an element, which functions as a lens, arranged in front of the photoelectric transducer device.

Throughout this specification and in the claims thereof, the concept of a "photoelectric transducer device" is intended to cover both a light-emitting element, such as a light-emitting diode or laser diode, and a light-receiving element, such as a photodiode or phototransistor. In addition, the element which functions as lens (hereinafter referred to as a "lens element") shall cover both an element which functions to converge light, such as a convex lens, and an element which functions to diverge light, such as a concave lens.

### Description of the Related Art:

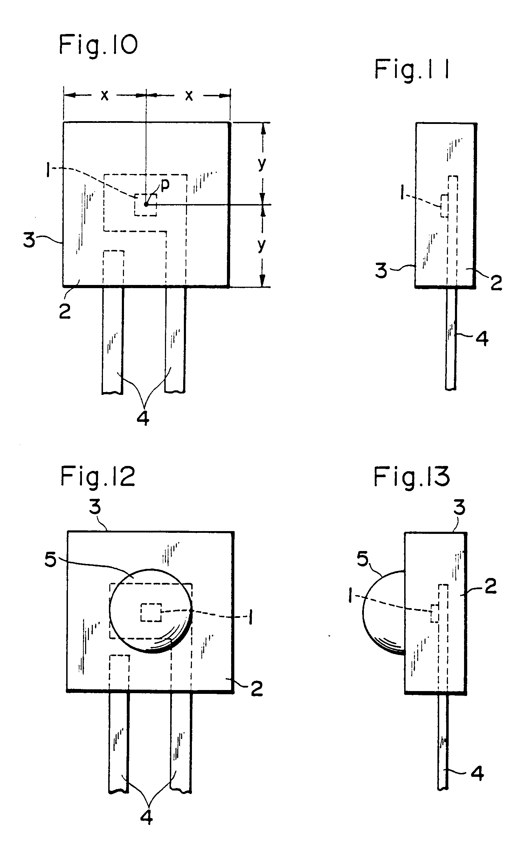

In the prior art, as shown in Figs. 10 and 11, by way of example, a photoelectric switch is provided with a light-emitting element 3 having a molded resin 2 in the shape of a rectangular parallelepiped at the center of which a light-emitting diode semiconductor chip 1 is encapsulated. Lead frames 4 electrically connect the semiconductor chip 1 with external circuitry.

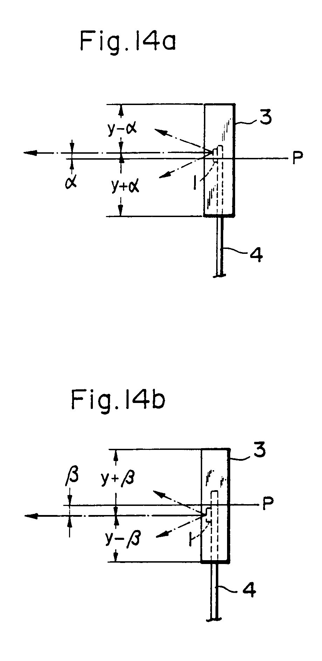

In another example of the prior art, as illustrated in Figs. 12 and 13, a condensing lens 5 is integrally molded with the molded resin 2, which is transparent.

Ideally, the optic axis of the semiconductor chip 1 in the light-emitting element 3 and the optic axis of the converging lens 5 are in perfect alignment. However, owing to disparities in the manufacturing process, the position of the center of the semiconductor chip 1 does not always coincide with a center position P on the external form of the molded resin 2 of the light-emitting element 3.

Further, in a photoelectric switch which employs a laser diode as the light-emitting element, any offset in the optic axes of the lens and laser diode has a profound effect upon the characteristics of the photoelectric switch. In a photoelectric switch of this kind, the laser diode is affixed to one face of a cylinder, which accommodates the lens, upon being positionally adjusted using a positional adjustment mechanism that includes an eccentric screw.

In the arrangement of Figs. 10 and 11, in which the semiconductor chip 1 is encapsulated by the molded resin 2, and in the arrangement of Figs. 12 and 13, in which the converging lens is integrally formed with the molded resin 2, the photoelectric switch is secured upon positioning the light-emitting element 3 (e.g., upon positioning it with respect to an objective lens) using the center point P on the external form of the molded resin 2 as a reference. However, as set forth above, and as depicted in Figs. 14a and 14b, the center point P on the external form of the molded resin 2 and the center of the semiconductor chip 3 encapsulated within the mold do not coincide owing to disparities in manufacture, and therefore a y-direction error α or β occurs. The same is true in the x-direction.

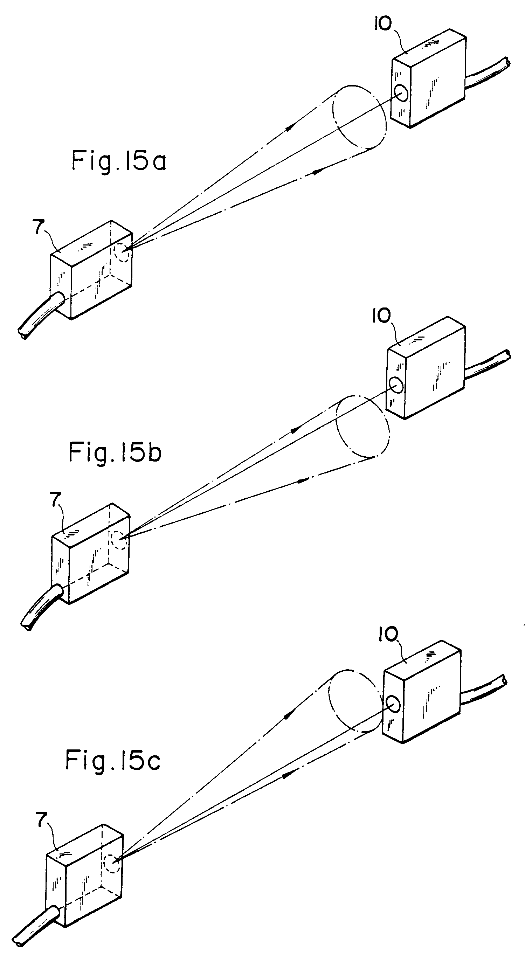

In particular, in case of the light-emitting element in which the condensing lens 5 is integrally provided, as shown in Figs. 12 and 13, the aforementioned errors are enlarged owing to the lens effect. This has an effect upon the detection accuracy of the photoelectric switch, as illustrated in Figs. 15a through 18.

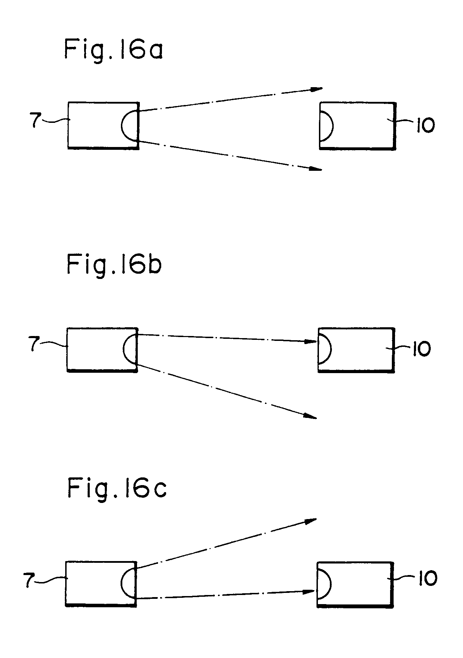

Figs. 15a through 15c and Figs. 16a through 16c are perspective views and plan views, respectively, illustrating the problems encountered with a transmission-type photoelectric switch. As evident from these drawings, the direction of a light emission from a projector 7, which accommodates the light-emitting element, toward a light-receiving unit 10 fluctuates widely from one drawing to the next.

In a case of a retroreflection-type photoelectric switch, the transmission-type light-receiving unit 10 is replaced by a reflector, and it will be understood that the same problem arises.

In order to reduce the influence which the fluctuation in emission direction has upon detection accuracy, the angle at which the light is emitted from the converging lens 5 should be widened. With this expedient, however, detection distance is shortened and mutually adjacent photoelectric switches interfere with each other. As a consequence, a problem which arises is that two or more photoelectric switches cannot be disposed close together. If the angle of emission is not widened, it becomes necessary to positionally adjust the mounting position of the light-receiving unit, and therefore mounting the photoelectric switch requires considerable labor.

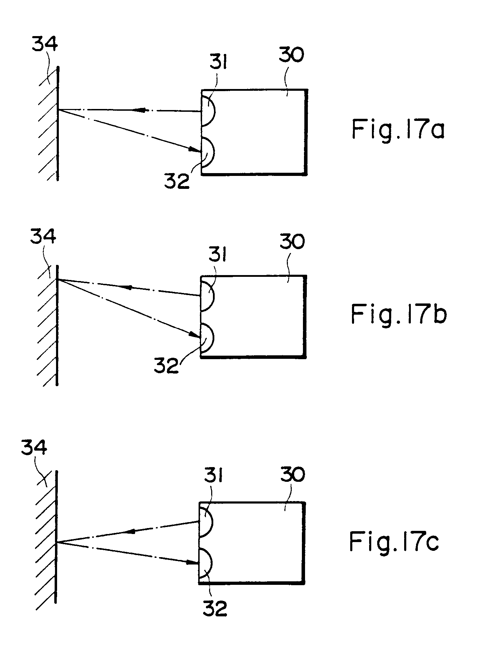

Figs. 17a through 17c are plan views illustrating problems which arise in case of a diffuse reflection-type photoelectric switch. Here a projecting unit 31 and a light-receiving unit 32 are provided in close proximity on one surface of a photoelectric switch 30. The light emitted from the projecting unit 31 is reflected by a subject 34, and the reflected light is incident upon the light-receiving unit 32.

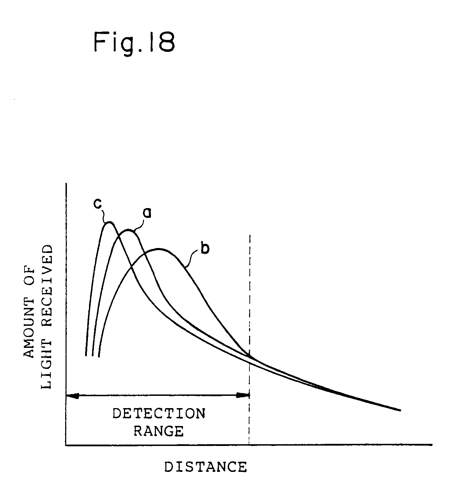

In this case, as indicated at a, b and C in Fig. 18, the characteristic of the relationship between detection distance and the quantity of received light fluctuates owing to a shift in the emitted light. In particular, the fluctuation in characteristics is great over the range of short distances. This makes it necessary to perform a sensitivity adjustment for each and every photoelectric switch, and hence there is an increase in labor needed for adjustment.

In a photoelectric switch which relies upon a laser diode, a greater amount of labor is needed to adjust the optic axis when the photoelectric switch is assembled. Since the adjustment mechanism is complicated, a manual task is involved and this impedes automation.

Furthermore, in a photoelectric switch using an optical fiber, there is a large fluctuation in the amount of light emitted from the emitting end of the optical fiber owing to misalignment between the center of the optical fiber and the optic axis of the light-emitting element. In particular, when use is made of a very slender optical fiber having a small angle of incidence, the fluctuation in amount of emitted light becomes quite pronounced. In order to solve this problem so as to satisfy the rated detection distance, the current which drives the light-emitting element must be enlarged.

In JP-A-1008 681 a solder ring 2 is interposed between the stem 3 on which the light emitting element pellet 5 is attached and the cap 1 having the ball lens 4 or rod lens, and the stem 3 and the cap 1 are sealed by melting the solder ring 2 by high frequency heating in order to reduce the deviation of optical axes of the light emitting element pellet 5 and the ball lens 4 and to improve manufacturing yield.

According to JP-A-61 253 872 a ball lens 5 is attached to the surface of the light emitting diode 2. The light emitting diode 2 is mounted on the stem base 1 which is covered by the cap 8. The cap 8 has a ball lens 9. The optical alignment between the ball lenses 5 and 9 is attained by correctly positioning the light emitting diode 2 on the stem base 1 when mounting the light emitting diode.

JP-A-55 056 676 relates to a technique for fixing a lens 10 on the end surface of the light emitting semiconductor device.

The same is true for JP-A-56 046 574. The recess 8 is formed on a surface of the semiconductor chip 2 in order to position the ball lens 6 therein.

### SUMMARY OF THE INVENTION

The present invention has been devised in view of the foregoing circumstances and its object is to provide a photoelectric sensor in which the aforementioned problems are solved by constructing a light-projecting unit or a light-receiving unit in which the optical central axis and the mechanical central axis (the central axis on the external form of the unit) are aligned.

According to the present invention, the foregoing object is attained by providing a photoelectric sensor as defined in claim 1.

The photoelectric transducer device includes a light-emitting element and a light-receiving element.

In a preferred embodiment of the present invention, the photoelectric transducer device comprises a photoelectric transducer semiconductor chip and a resin in which the semiconductor chip is molded, the lens element being secured to the front surface of the molded resin.

In still another preferred embodiment of the present invention, at least part of an outer peripheral portion of the end face of the lens element that is in contact with the photoelectric transducer device is cut away, and the end face of the lens element is bonded to the front surface of the photoelectric transducer device.

In the present invention, the optic axis of the lens element and the optic axis of the photoelectric transducer device are in coincidence at all times, and therefore manufacturing error is eliminated. As a result, the many problems caused by misalignment of the optic axes are solved.

In the embodiments of the invention, the retaining member is formed to have the recess in which the lens element fits perfectly, and the lens element is fixedly secured by being press-fitted into the recess. The optic axis of the lens element and the optic axis of the photoelectric transducer device are in alignment, and the photoelectric transducer device is fixedly secured to the retaining member by press-fitting the lens element into the recess. Accordingly, the optic axes are always in a fixed relation relative to the retaining member, and it is possible for the photoelectric transducer device to be correctly positioned in the photoelectric switch via the retaining member. The operation for positioning the photoelectric transducer device is thus facilitated. In addition, if the external shape of the lens element is the same, the same retaining member can be used even if the external shape of the photoelectric transducer device differs.

If a portion of the lens element is formed to have a cut-away portion, when the lens element is bonded to the photoelectric transducer device, the bonding strength is improved because the bonding agent flows in from around the cut-away portion of the lens element. Even if a large amount of the bonding agent is. applied, the agent is absorbed by the cut-away portion and overflow thereof to the exterior of the outer periphery is eliminated or minimized. This facilitates assembly.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

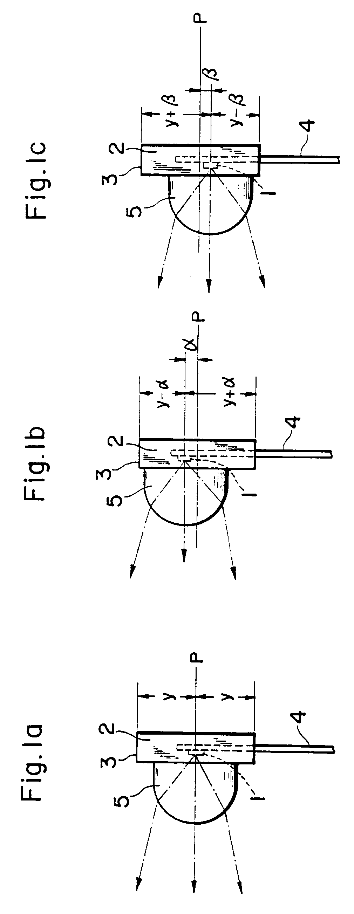

Figs. 1a through 1c are side views illustrating a light-emitting element according to an embodiment of the present invention;

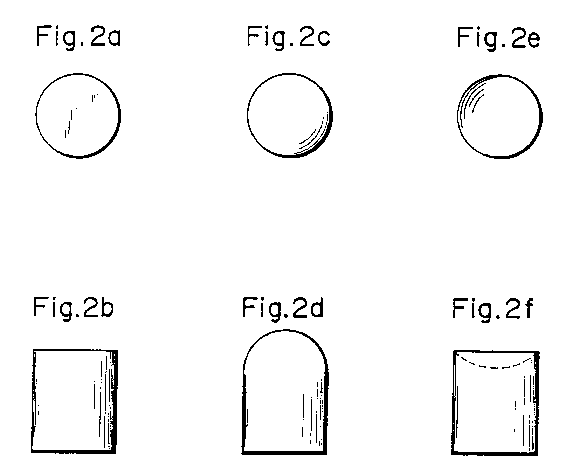

Figs. 2a through 2f illustrate examples of shapes of lenses, in which Figs. 2a, 2c and 2e are plan views and Figs. 2b, 2d and 2f are side views;

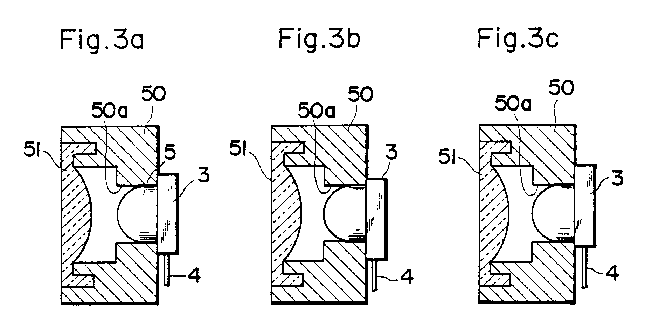

Figs. 3a through 3c are sectional views illustrating different states in which a light-emitting element is retained by a retaining member;

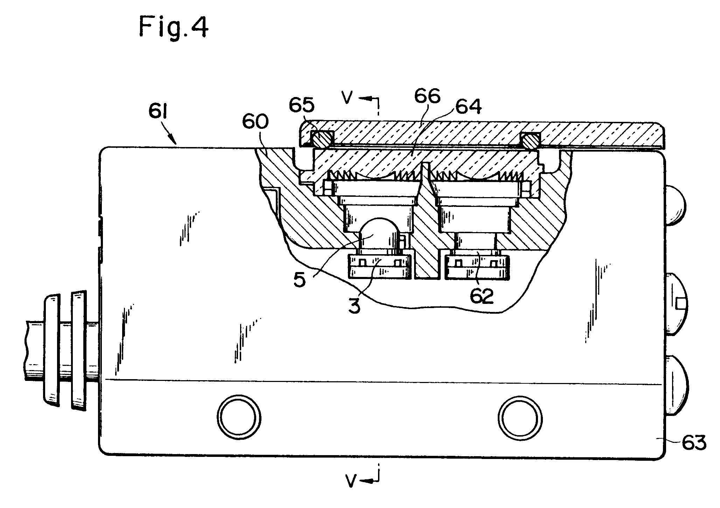

Fig. 4 is a partially cut-away side view showing a diffuse reflection-type photoelectric switch;

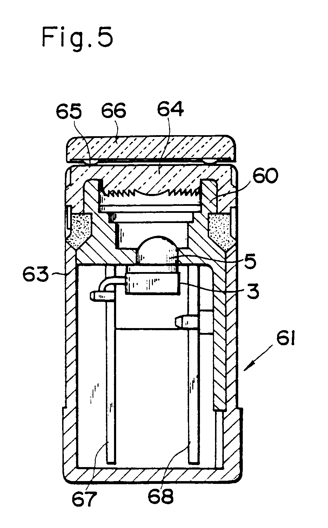

Fig. 5 is a sectional view taken along line V-V of Fig. 4;

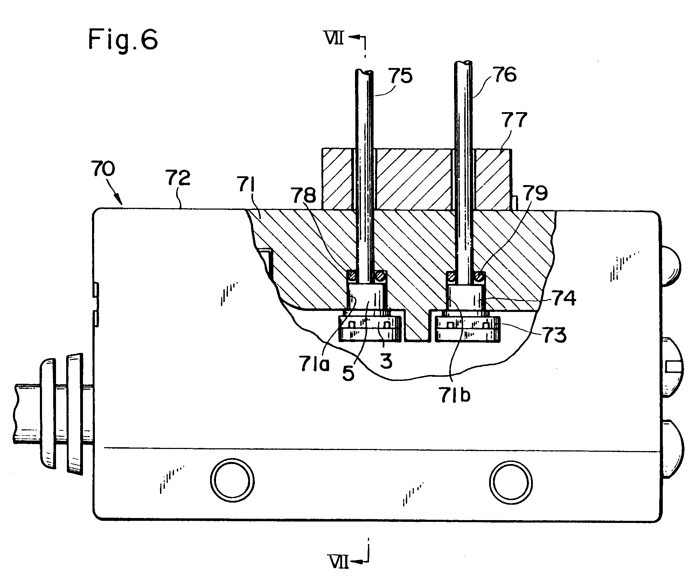

Fig. 6 is a partially cut-away side view showing an optical fiber-type photoelectric switch;

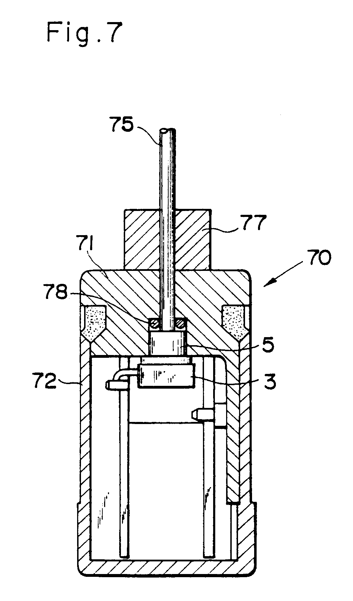

Fig. 7 is a sectional view taken along line VII-VII of Fig. 6;

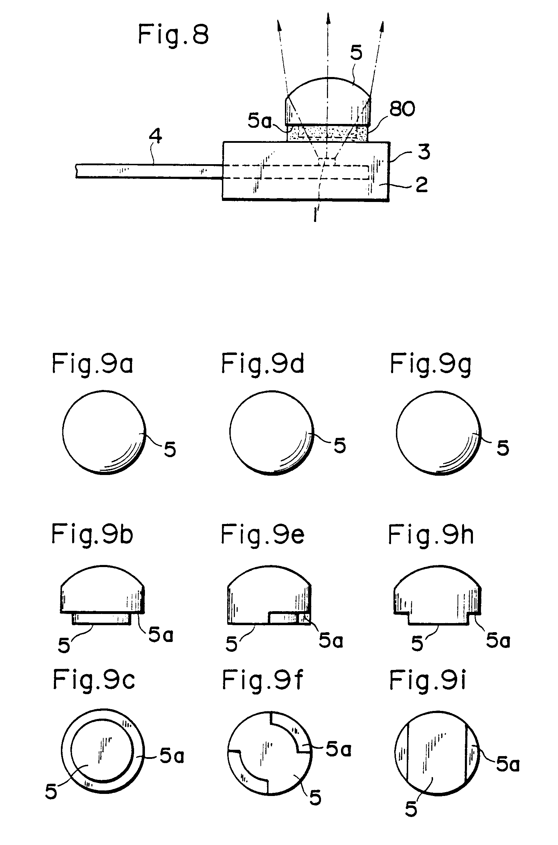

Fig. 8 is a side view illustrating a light-emitting element;
Figs. 9a through 9i illustrate examples of shapes of condensing lenses, in which Figs. 9a, 9d and 9g are plan views, Figs. 9b, 9e and 9h are side views, and Figs. 9c, 9f and 9i are bottom views;
Figs. 10 and 11 are a front view and side view, respectively, illustrating the construction of a prior-art light-emitting element not having a lens;
Figs. 12 and 13 are a front view and side view, respectively, illustrating the construction of a prior-art light-emitting element formed to have a lens as an integral part thereof;
Figs. 14a and 14b illustrate a problem which arises with the conventional light-emitting element;
Figs. 15a through 15c, Figs. 16a through 16c and Figs. 17a through 17c are diagrams for describing problems encountered with conventional photoelectric switches; and
Fig. 18 is a graph showing the relationship between detection distance and the quantity of received light in the photoelectric switch of Figs. 17a to 17c.

### DESCRIPTION OF THE PREFERRED EMBODIMENT

Figs. 1a through 1c illustrate an embodiment of a light-emitting element according to the present invention. Portions in these drawings that correspond to those of the prior-art examples shown in Figs. 10 through 13 are designated by like reference characters and need not be described again.

Though the basic construction of the light-emitting element 3 is similar to that of the prior art examples shown in Figs. 10 through 13, in this embodiment the condensing lens 5 is formed separately of the molded resin 2 and is bonded to the molded resin 2 by a bonding agent. When the condensing lens 5 is bonded to the front face of the molded resin 2, assembly can be accomplished in such a manner that the optic axis of the condensing lens 5 passes through the center of the light-emitting diode semiconductor chip 1 (i.e., in such a manner that the optic axes coincide) using an optic axis aligning apparatus previously proposed by the applicant in Japanese Patent Application No. 1-9415.

More specifically, the image of the external shape of the semiconductor chip 1 is observed by a television camera or the like, and the position of its center of gravity is obtained by calculation. Similarly, the image of the external shape of the condensing lens 5 is observed by a television camera or the like, and the position of its center of gravity is obtained by calculation. The semiconductor chip 1 and condensing lens 5 are positioned so as to bring their centers of gravity into agreement.

It is also possible to affix the condensing lens 5 to the front face of the molded resin 2 by ultrasonic welding.

Figs. 2a through 2f illustrate various shapes of lens elements.

In Figs. 2a and 2b, the lens element has the shape of a circular cylinder both end faces of which are flat. This acts to diverge light in the same manner as a concave lens by refraction of light. The lens element shown in Figs. 2c and 2d has the shape of a circular cylinder whose end face bonded to the molded resin 2 is planar while its opposite end face defines a convex spherical surface. This lens element is substantially the same as the condensing lens shown in Figs. 1a through 1c and acts to converge light. The lens element shown in Figs. 2e and 2f has the shape of a circular cylinder whose end face bonded to the molded resin 2 is planar while its opposite end face defines a concave spherical surface. This is a concave lens and therefore diverges light.

When the light-diverging lens elements shown in Figs.2a, 2b, 2e and 2f are combined with an objective lens (a convex lens) provided on the front face of the photoelectric switch to construct an optical system, the effect is to essentially lengthen the focal distance of the objective lens.

Furthermore, with the configuration shown in Figs. 2a and 2b, it is also possible to use this lens element as a lens in which the internal refractive index possesses a distribution, namely as a rod lens.

Even if the position at which the semiconductor chip 1 is molded in the molded resin 2 develops an error α or β owing to the manufacturing process, as shown in Figs. 1b and 1c, the optic axis of the condensing lens 5 always passes through the center of the semiconductor chip 1.

Accordingly, in a transmission-type or retroreflection-type photoelectric switch, it is unnecessary to widen the angle at which light emerges from the condensing lens 5, and therefore detection distance can be lengthened. In addition, since the range of susceptibility to mutual interference is narrowed, photoelectric switches can be arranged closer together than in the prior art.

Further, in a diffuse reflection-type photoelectric switch, the detection distance vs. received-light quantity characteristic is substantially constant. Therefore, in a case where a plurality of the photoelectric switches are arranged at a fixed interval, the angles at which the sensitivity adjusting dials of the switches are set are substantially fixed. This greatly curtains the labor needed for adjustment.

Figs. 3a through 3c illustrate the manner in which the light-emitting element of Figs. 1a through 1c is secured to a retaining member.

A holder 50 serving as the retaining member is formed to have a mounting hole 50a in which the condensing lens 5 fits perfectly. The condensing lens 5 is press-fitted into the mounting hole 50a, thereby positioning the light-emitting element 3 and securing it to the holder 50. If necessary, the light-emitting element 3 can be bonded to the holder 50. An objective lens 51 is attached to the front face of the holder 50 so as to be concentric with the mounting hole 50a. Thus, the optic axis of the objective lens 50 and the optic axis of the light-emitting element 3 coincide.

Figs. 4 and 5 illustrate a diffuse reflection-type photoelectric switch 61. Here the light-emitting element 3 is attached to a holder 60. A light-receiving unit 62 is secured at a prescribed position of the holder 60 alongside the light-emitting element 3. The holder 60 is mounted inside a case 63, and the top surface of the holder 60 is provided with an objective lens 64. The latter is covered by a lens cover 66 via a packing 65. Printed circuit boards 67, 68 on which a light-projecting circuit and a light-receiving circuit, respectively, have been assembled are provided for the light-emitting element 3 and the light-receiving unit 62, respectively.

In accordance with this embodiment, the optic axis of the condensing lens 5 and the center of the semiconductor chip 1 of the light-emitting element 3 coincide. As a result, the semiconductor chip 1 will always be attached at the correct position relative to the holder 50 even if the center of the semiconductor chip 1 is offset relative to the center P of the molded resin 2. In other words, by fitting the condensing lens 5 of the light-emitting element 3 into the mounting hole 50a of the holder 50, the lens can be attached to the holder 50 in a state where the optic axis of the condensing lens 5 is made to agree with the center of the semiconductor chip 1. Accordingly, mounting is facilitated and the labor involved in mounting can be reduced.

Further, even if the external form of the molded resin 2 (the light-emitting element 3) differs from one article to the next, the same holder 50 can be used so long as the external form of the condensing lens 5 is the same. This makes it possible to reduce the labor involved in design. Furthermore, if the outer diameter is the same, assembly is possible using the same apparatus. As a result, equipment cost for the assembly apparatus can be reduced.

Figs. 6 and 7 illustrate the structure of an embodiment for a case where the above-described light-emitting element is mounted in an optical fiber-type photoelectric switch 70.

As shown in Figs. 6 and 7, a holder 71 is mounted inside a case 72. The holder 71 is formed to have a pair of mounting holes 71a, 71b in which the light-emitting element 3 and a light-receiving unit 73 having lens 5, 74, respectively, are mounted. Each of the lenses 5, 74 is formed into a circular cylinder both of whose end faces are planar. The lens 5 has one face bonded to the light-emitting element 3, while an optical fiber 75 is bonded or contacted to its other end face. The lens 74 has one face bonded to the light-receiving unit 73, while an optical fiber 76 is bonded or contacted to its other end face. The optical fibers 75, 76 are secured by a fiber securing member 77 provided on the upper surface of the holder 71. The outer peripheries of the joints between the optical fiber 75 and lens 5 and between the optical fiber 76 and the lens 74 are positioned concentrically by packings 78, 79 fitted into the mounting holes 71a, 71b, respectively.

In accordance with this embodiment, misalignment of the optic axes of the optical fibers 75, 76 and the optic axes of the light-emitting element 3 and light-receiving unit 73, respectively, is eliminated. As a result, the quantity of light involved in transmission leakage is reduced and a variance in detection distance from one photoelectric switch to another is eliminated. Moreover, the detection distance can be lengthened. Another advantage is that the current consumed in a photoelectric switch of the same detection distance can be reduced.

Fig. 8 and Figs. 9a through 9i relate to an embodiment of a light emitting element, in which portions corresponding to those of the embodiment shown in Figs. 1a through 1c are designated by like reference characters and need not be described again.

This embodiment is characterized in that the outer circumference of the end face of condensing lens 5 on the side thereof that is bonded to the molded resin 2 is reduced in diameter to form a step portion 5a. The structure of other portions is the same as that of the embodiment shown in Figs. 1a to 1c.

As shown in Figs. 9a through 9c, the step portion 5a can be formed in annular fashion about the entire circumference of the lens 5. Also, as illustrated in Figs. 9d through 9f and Figs. 9g through 9i, the step portion 5a can be formed as an arcuate portion or linear portion at parts of the outer circumference.

As depicted in Fig. 8, the condensing lens 5 is fixedly bonded to the molded resin 2 by a bonding agent 80 with its optic axis aligned by the optic axis aligning apparatus described above. Examples of the bonding agent 80 are bonding agents curable by ultraviolet radiation or heat, as well as one-part or two-part epoxy resins. Since the bonding agent 80 fills the space between the abutting faces of the lens 5 and molded resin 2 as well as the step portion 5a, bonding strength is improved.

The abutting faces of the condensing lens 5 and molded resin 2 are finished to mirror surfaces so that random refraction will not occur. Although this will reduce the affinity of the bonding agent 80 to these surfaces, the adhesive force can be strengthened by roughening the surface of the step portion 5a by embossing or sandblasting work.

Furthermore, when the bonding agent 80 is applied to the surface of the molded resin 2 by a bonding-agent supply device (not shown), any variance in the amount of bonding agent applied is absorbed by the volume of the step portion 5a. As a result, overflow of the bonding agent 80 to the exterior of the outer periphery of the condensing lens 5 can be prevented, thereby facilitating press-fitting of the lens into the holder. Moreover, the range over which the amount of bonding agent is controlled in the supply device is enlarged, thereby facilitating management.

In the foregoing, an example is described in which the light-emitting diode semiconductor chip 1 is molded as the light-emitting element in the resin 2. However, the invention is applicable also to a case where a light-receiving element such as a photodiode is molded in the resin 2.

## Claims

1. A photoelectric sensor comprising a retaining member (50), a first lens (51) attached to the retaining member, a second lens element (5) and a photoelectric transducer device (3), the second lens element being secured to a front face of the photoelectric transducer device in a state where an optic axis of the second lens element is aligned with an optic axis of the photoelectric transducer device,
characterized in that the retaining member (50) is formed with a recess (50a) at such a portion that an optic axis of the first lens (51) coincides with a center line of the recess, and the second lens element (5) is fitted into the recess, whereby the second lens element (5) and the photoelectric transducer device (3) are attached to the retaining member (50).

2. A photoelectric sensor according to claim 1, characterized in that the photoelectric transducer device (3) comprises a photoelectric transducer semiconductor chip (1) and a resin (2) in which the semiconductor chip is molded, the second lens element being secured to a front surface of the molded resin.

3. A photoelectric sensor according to claim 1, characterized in that at least part of an outer peripheral portion (5a) of the end face of the second lens element (5) that is in contact with the photoelectric transducer device (3) is cut away, and the end face of the second lens element is bonded to the front face of the photoelectric transducer device.

## Patentansprüche

1. Photoelektrischer Sensor mit einem Halteteil (50), einer am Halteteil angebrachten ersten Linse (51), einem zweiten Linsenelement (5) und einer photoelektrischen Wandlervorrichtung (3), wobei das zweite Linsenelement an einer Vorderfläche der photoelektrischen Wandlervorrichtung in einem Zustand befestigt ist, in dem eine optische Achse des zweiten Linsenelements auf eine optische Achse der photoelektrischen Wandlervorrichtung ausgerichtet ist,
dadurch gekennzeichnet, daß das Halteteil (50) mit einer Ausnehmung (50a) an einem solchen Abschnitt ausgebildet ist, daß eine optische Achse der ersten Linse (51) mit einer Mittellinie der Ausnehmung zusammenfällt, und das zweite Linsenelement (5) in die Ausnehmung eingesetzt ist, wodurch das zweite Linsenelement (5) und die photoelektrische Wandlervorrichtung (3) am Halteelement (50) angebracht sind.

2. Photoelektrischer Sensor nach Anspruch 1, dadurch gekennzeichnet, daß die photoelektrische Wandlervorrichtung (3) einen photoelektrischen Wandlerhalbleiterchip (1) und ein Harz (2), in den der Halbleiterchip eingeformt ist, aufweist, wobei das zweite Linsenelement an einer Vorderfläche des geformten Harzes befestigt ist.

3. Photoelektrischer Sensor nach Anspruch 1, dadurch gekennzeichnet, daß wenigstens ein Teil eines äußeren Umfangsrandabschnitts (5a) der Endfläche des zweiten Linsenelements (5), die mit der photoelektrischen Wandlervorrichtung (3) in Berührung ist, ausgeschnitten ist und die Endfläche des zweiten Linsenelements an der Vorderfläche der photoelektrischen Wandlervorrichtung zur Anhaftung gebracht ist.

## Revendications

1. Capteur photoélectrique comprenant un élément de retenue (50), une première lentille (51) fixée à l'élément de retenue, un second élément de lentille (5) et un dispositif à transducteur photoélectrique (3), le second élément de lentille étant fixé sur une face avant du dispositif formant transducteur photoélectrique dans un état, dans lequel un axe optique du second élément de lentille est aligné avec un axe optique du dispositif formant transducteur photoélectrique, caractérisé en ce que l'élément de retenue (50) est pourvu d'un renfoncement (50a) dans une partie telle qu'un axe optique de la première lentille (51) coïncide avec un axe central du renfoncement, et le second élément de lentille (5) est monté dans le renfoncement, le second élément de lentille (5) et le dispositif formant transducteur photoélectrique (3) étant fixés à l'élément de retenue (50).

2. Capteur photoélectrique selon la revendication 1, caractérisé en ce que le dispositif formant transducteur photoélectrique (3) comprend une microplaquette à semiconducteurs (1) formant transducteur photoélectrique et une résine (2), dans laquelle la microplaquette à semiconducteurs est enrobée, le second élément de lentille étant fixé à une surface avant de la résine moulée.

3. Capteur photoélectrique selon la revendication 1, caractérisé en ce qu'au moins une portion d'une partie périphérique (5a) de la face d'extrémité du second élément de lentille (5), qui est en contact avec le dispositif formant transducteur photoélectrique (3), est évidée, et que la face d'extrémité du second élément de lentille est réunie à la face avant du dispositif formant transducteur photoélectrique.
